(19) **Europäisches Patentamt / European Patent Office / Office européen des brevets**

(11) **EP 1 786 213 A2**

(12) **EUROPEAN PATENT APPLICATION**

(43) Date of publication:
**16.05.2007 Bulletin 2007/20**

(51) Int Cl.:
*H04N 9/64* (2006.01)     *H04N 9/74* (2006.01)

(21) Application number: **06000354.8**

(22) Date of filing: **10.01.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **10.11.2005  CN 200510115881**

(71) Applicant: **Cheertek Inc.**
**Hsinchu 300 (TW)**

(72) Inventor: **Hsu, Chin-Fu**
**Hsinchu 300 (TW)**

(74) Representative: **Helms, Joachim**
**Patentanwalt**
**Postfach 22 14 43**
**80504 München (DE)**

(54) **A method of using matrix to adjust hue and color saturation**

(57)     A method of using matrix to adjust hue and color saturation includes the following steps: transform a YUV format signal into a RGB format signal with a first matrix; the RGB format signal is multiplied by a second matrix to obtain a RGB format signal whose hue and/or color saturation can be adjusted.

STEP 1

TRANSFORM A YUV FORMAT SIGNAL INTO A RGB FORMAT SIGNAL WITH A FIRST MATRIX.

STEP 2

THE RGB FORMAT SIGNAL IS MULTIPLIED BY A SECOND MATRIX TO OBTAIN A RGB FORMAT SIGNAL WHOSE HUE AND/OR COLOR SATURATION CAN BE ADJUSTED.

FIG. 1

**Description**

FIELD OF THE INVENTION

The present invention relates to a method of using matrix to hue and color saturation, and particularly to a method of using matrix to adjust hue and color saturation, which can simplify the complexity of chip design and reduce chip size to cut the cost of producing chip.

BACKGROUND OF THE INVENTION

The format of the video signal of LCD TV is YUV, but that of the video signal for the display in a thin-film transistor (TFT) liquid crystal panel is RGB. Consequently, there is a built-in circuit in the video signal decoder to transform the video signal format from YUV to RGB.

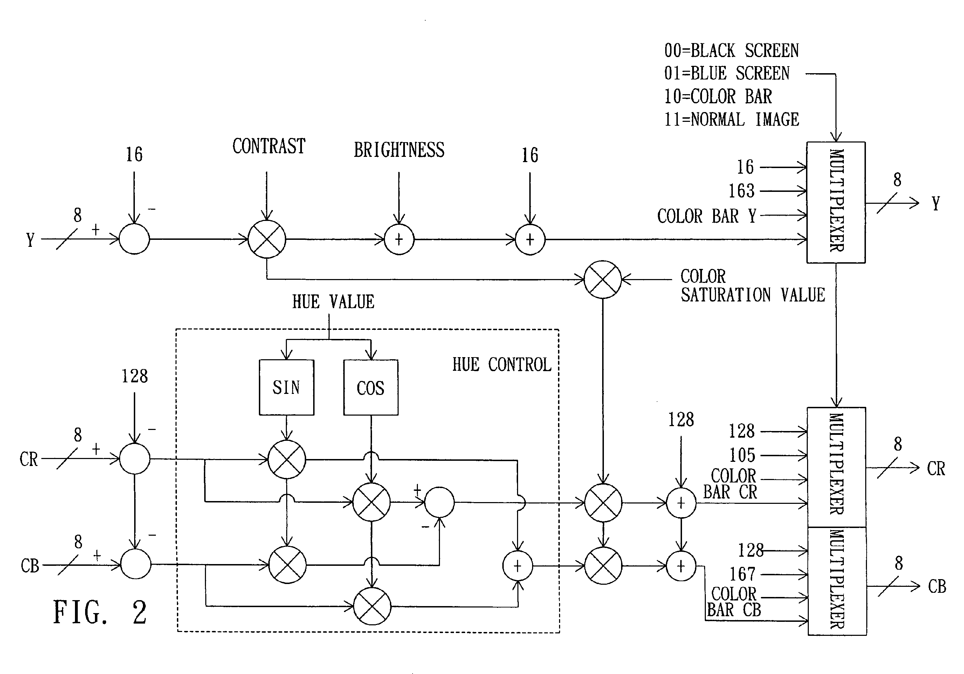

FIG. 2 is a schematic illustration of the circuits for transforming a LUV format signal to a RGB format signal and for adjusting hue and color saturation of a conventional video signal decoder. Referring to FIG 2, apart from a circuit for transforming a video signal from LUV format to a RGB format, the video signal decoder is also provided with a circuit to adjust hue and color saturation. The circuit adjusting hue and color saturation uses a sinusoidal circuit, a cosine circuit, an adder, and a multiplier to adjust hue and color saturation. However, the complicated nature of sinusoidal and cosine circuits has increased the difficulty in chip design and chip size and thus the cost of producing chip.

To overcome the shortcoming of the aforementioned conventional circuit for adjusting hue and color saturation, it is necessary to have a method of using matrix to adjust hue and color saturation, which can simplify the complexity of chip design and reduce chip size to cut the cost of producing chip.

SUMMARY OF THE INVENTION

It is an obj ect of the present invention to provide a method of using matrix to adjust hue and color saturation, which uses matrix to adjust hue and color saturation. The method can simplify the complexity of chip design and reduce chip size to cut the cost of producing chip.

It is an obj ect of the present invention to provide a method of using matrix to adjust hue and color saturation, including the following steps: transform a YUV format signal into a RGB format signal with a first matrix; the RGB format signal is multiplied by a second matrix to obtain a RGB format signal whose hue and/or color saturation can be adjusted.

BRIEF DESCRIPTION OF THE DRAWINGS

The present invention can be more fully understood by reference to the following description and accompanying drawings, in which:

FIG. 1 is a flow chart for a method of using matrix to adjust hue and color saturation according to the present invention; and

Figs. 2 is a schematic illustration of the circuits for transforming a LUV format signal to a RGB format signal and for adjusting hue and color saturation of a conventional video signal decoder.

DETAILED DESCRIPTION OF THE INVENTION

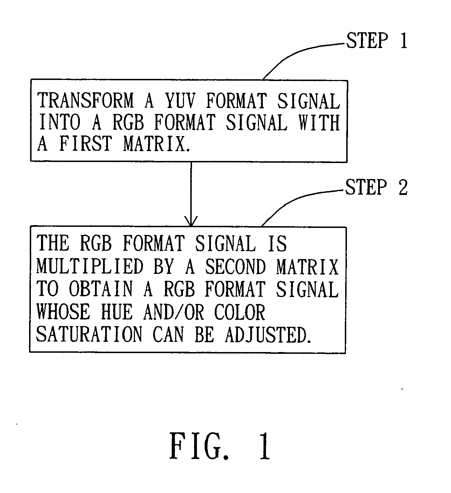

FIG. 1 is a flow chart for a method of using matrix to adjust hue and color saturation according to the present invention. Referring to FIG. 2, the method of using matrix to adjust hue and color saturation according to the present invention is applicable in an electric appliance, which is, for example, but not limited to, a LCD TV, a portable audio/video displayer/recorder, or a digital set top box, including the following steps: transform a YUV format signal into a RGB format signal with a first matrix (step 1); the RGB format signal is multiplied by a second matrix to obtain a RGB format signal whose hue and/or color saturation can be adjusted (step 2).

In t h e step 1, the equations for the first matrix which transforms a YUV format signal into a RGB format signal are:

$$R = Y + \qquad 1.140V \qquad \text{(equation 1)}$$

$$G = Y - 0.395U - 0.581V \qquad \text{(equation 2)}$$

$$B = Y + 2.032U \qquad \text{(equation 3)}$$

Rearrange equations 1 to 3 can lead to the first matrix, whose coefficients are:

$$\begin{bmatrix} 1 & 0 & 1.140 \\ 1 & -0.395 & -0.581 \\ 1 & 2.032 & 0 \end{bmatrix}$$

Consequently, the matrix expression for using the first transformation matrix (a 3x3 matrix) described above to transform a YUV format signal to a RGB format signal can be written as:

$$\begin{bmatrix} R \\ G \\ B \end{bmatrix} = \begin{bmatrix} 1 & 0 & 1.140 \\ 1 & -0.395 & -0.581 \\ 1 & 2.032 & 0 \end{bmatrix} \begin{bmatrix} Y \\ U \\ V \end{bmatrix} \qquad \text{(equation 4)}.$$

In the step 2, the RGB format signal is multiplied by a second matrix to obtain a RGB format signal whose hue and/or color saturation can be adjusted. The second transformation matrix is a 3x3 matrix, whose coefficients are:

$$\begin{bmatrix} 1 & 0 & 0 \\ 0 & \cos(hue)*Sat & -\sin(hue)*Sat \\ 0 & \sin(hue)*Sat & \cos(hue)*Sat \end{bmatrix}$$

Consequently, the matrix expression for using the second transformation matrix (a 3x3 matrix) described above to adjust the hue and color saturation of a RGB format can be written as:

$$\begin{bmatrix} R \\ G \\ B \end{bmatrix} = \begin{bmatrix} 1 & 0 & 1.140 \\ 1 & -0.395 & -0.581 \\ 1 & 2.032 & 0 \end{bmatrix} X \begin{bmatrix} 1 & 0 & 0 \\ 0 & \cos(hue)*Sat & -\sin(hue)*Sat \\ 0 & \sin(hue)*Sat & \cos(hue)*Sat \end{bmatrix} X \begin{bmatrix} Y \\ U \\ V \end{bmatrix}$$

(equation 5)

where the parameter Sat represents color saturation, whose range is 0~1.992. Consequently, after the matrix operation of the equation 5 described above, a YUV format signal can be transformed into a RGB format signal and its hue and/or color saturation can be adjusted by the second transformation matrix. The aforementioned matrix multiplication can be achieved by executing a software program, which can be, for example, but not limited to C or C++. Chip designers need only to modify the parameters of hue and color saturation by a program language to adjust hue and color saturation. Consequently, the method of using matrix to adjust hue and color saturation according to the present invention can eliminate the need for a sinusoidal circuit, a cosine circuit, an adder, and a multiplier. Therefore, the method of using matrix to adjust hue and color saturation according to the present invention can simplify the complexity of chip design and reduce chip size to cut the cost of producing chip.

A learning method of using matrix to adjust hue and color saturation according to the present invention is described above. The method can simplify the complexity of chip design and reduce chip size to cut the cost of producing chip. These advantages are not possible to achieve with the prior art. Consequently, it can indeed improve the shortcoming of using circuit to adjust hue and color saturation.

While the invention has been described with reference to the a preferred embodiment thereof, it is to be understood that modifications or variations may be easily made without departing from the spirit of this invention, which is defined by the appended claims.

**Claims**

1. A method of using matrix to adjust hue and color saturation, comprising the following steps:

   transform a YUV format signal into a RGB format signal with a first matrix; and
   the RGB format signal is multiplied by a second matrix to obtain a RGB format signal whose hue and/or color saturation can be adjusted.

2. The method of claim 1, wherein the first transformation matrix is a 3 x 3 matrix.

3. The method of claim 2, the 3x3 matrix's coefficients are:

$$\begin{bmatrix} 1 & 0 & 1.140 \\ 1 & -0.395 & -0.581 \\ 1 & 2.032 & 0 \end{bmatrix}.$$

4. The method of claim 1, wherein the second transformation matrix is a 3 x 3 matrix.

5. The method of claim 4, wherein the 3x3 matrix's coefficients are:

$$\begin{bmatrix} 1 & 0 & 0 \\ 0 & \cos(hue)*Sat & -\sin(hue)*Sat \\ 0 & \sin(hue)*Sat & \cos(hue)*Sat \end{bmatrix}.$$

**6.** The method of claim 5, the value of hue is 0~360°.

**7.** The method of claim 5, the value of color saturation is 0~1.992.

STEP 1

TRANSFORM A YUV FORMAT SIGNAL
INTO A RGB FORMAT SIGNAL WITH
A FIRST MATRIX.

STEP 2

THE RGB FORMAT SIGNAL IS
MULTIPLIED BY A SECOND MATRIX
TO OBTAIN A RGB FORMAT SIGNAL
WHOSE HUE AND/OR COLOR
SATURATION CAN BE ADJUSTED.

FIG. 1

FIG. 2